# EUROPEAN PATENT APPLICATION

(11) **EP 3 581 324 A1**
(43) Date of publication of application: **18.12.2019**
(21) Application number: 19179805.7
(22) Date of filing: 12.06.2019
(51) Int. Cl.: B23K 37/00, B23K 26/12, B23K 26/70, B23K 26/03, F16P 1/06, B23K 26/08, B23K 26/20, B23K 26/36, B23K 37/02

(54) **PLANT AND METHOD FOR THE PROCESSING OF LONG PRODUCTS IN STEEL BY FIBER LASER**

(30) Priority: 12.06.2018 IT 201800006251
(71) Applicant: Manni Sipre S.p.A., 37135 Verona (IT)
(72) Inventor: MASSIMO, FABBRI, 37057 San Giovanni Lupatoto (VR) (IT)
(74) Representative: Autuori, Angelo

(57) **Abstract**

A plant for machining long products (**P**) made of steel that can be controlled by at least one operator (**O**), comprising a first working area (**10**), means (**20**) for automatically loading the long product (**P**) to be machined in the first work area (**10**), means (**17**) for locking the long product (**P**) in the first working area (**10**) in a predetermined operative position, means for automatically unloading (**30**) the machined long product (**P**) from the working area (**10**). The plant further comprises at least one machining head (**15**) and at least one laser (**13**). The plant further comprises box-shaped screening means (**11**) arranged at the first working area (**10**) for screening the laser beam and protecting the operator (**O**) stationed in the second working area (**70**) so as to work under safe conditions. The substantially box-shaped screening means (**11**) comprise at least one inlet (**E**) and at least one outlet (**U**). The automatic loading and unloading means (**20, 30**) respectively comprise a first and a second line (**L1**, **L2**) for the advancement of the long product (**P**), along respective loading and unloading directions passing through the inlet (**E**) and the outlet (**U**) of the screening means (**11**).

## Description

### Field of the invention

The present invention generally applies to the technical field of machining long products made of steel, and it particularly regards a plant and a method for machining such long products using fibre laser.

### State of the Art

Plants for machining long products made of steel, generally made of stainless steel or made of structural steel, such as for example beams or the like are known.

The use of such plants for fibre laser heads for machining such long products made of steel for carrying out cutting, drilling, marking operations or the like is known.

In particular, the use of fibre laser heads in plants in which the long product made of structural steel is supported by two spindles which displace the piece while the fibre laser heads are substantially stationary is currently known.

As a matter of fact, in such type of plants the fibre laser heads have limited degree of movement due to the fact that the machining operations that can be potentially carried out on the product depend on the cooperation between the movement of the head and the full rotation of the piece fixed on the spindles.

Thus, such plants generally limit the possible machining operations on the long product itself.

Furthermore, the known plants require complex displacements of the long products, hence they have particularly large dimensions and they are expensive to manufacture.

A further drawback of such plants lies in allowing a limited production and requiring a high number of specialised operators.

### Summary of the invention

An object of the present invention is to at least partly overcome the drawbacks illustrated above, by providing a highly efficient and relatively inexpensive plant for machining long products made of steel.

Another object of the present invention is to provide a plant that allows the automatic machining of long products.

Another object of the present invention is to provide a plant that allows different types of machining operations on the long product made of steel.

Another object of the present invention is to provide a plant for machining long products made of steel that is extremely safe.

Another object of the invention is to provide a plant that is particularly suitable to machine long products made of structural steel.

Another object of the present invention is to provide a plant for machining long products made of steel that has low maintenance and operating costs.

Another object of the present invention is to provide a plant for machining long products made of steel entailing low thermal alteration of the machined products.

Another object of the present invention is to provide a plant for machining long products made of steel entailing high cutting accuracy.

Another object of the present invention is to provide a plant for machining long products made of steel that has small overall dimensions.

These and other objects to be further clarified hereinafter, are attained by a plant and a method for machining long products made of steel having one or more of the characteristics described, illustrated and/or claimed herein.

The dependent claims describe advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:

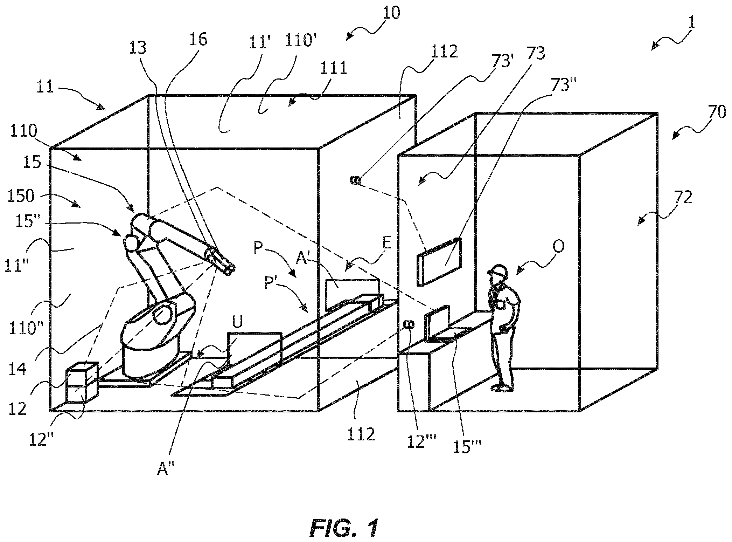

**FIG. 1** is a schematic view of the plant **1;**

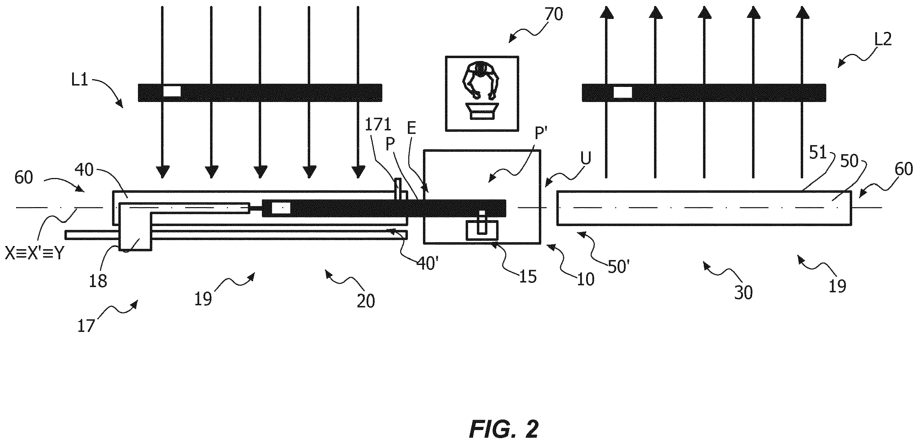

**FIG. 2** is a top schematic view of the plant **1.**

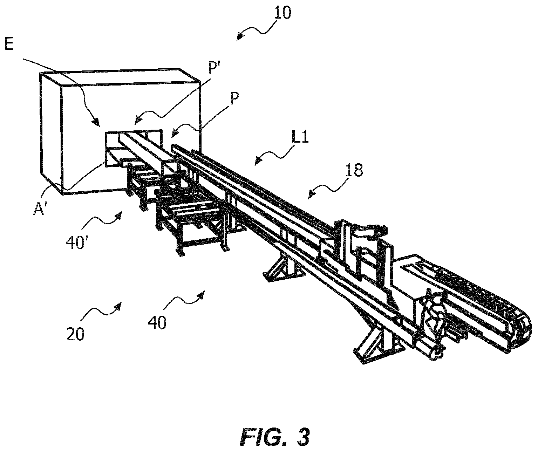

**FIG. 3** is an axonometric view of a part of the plant **1,** in particular highlighting the loading means **20.**

### Detailed description of a preferred embodiment

With reference to the aforementioned figures, herein described is a plant **1** for machining long products **P** made of steel, that can be controlled by an operator **O.**

In particular, the expression "long products" is used to indicate elements such as, for example, H-shaped beams, I-shaped beams, laminates, profiles, tubular or the like.

Such long products may for example preferably be made of stainless steel or made of structural steel.

In particular, the plant **1** may be particularly suitable for machining long products made of structural steel.

In the present document, the expression "products made of structural steel" and the like is used to indicate products made of steel for structural uses according to the UNI EN 10027-1 standard. According to such standard, the structural steel is classified with initials whose first letter is S, B or Y.

It is clear that the plant **1** may cooperate with other machining plants of the per se known type. For example, it may be arranged after a carpentry machining plant, such as for example saw cutting and/or drilling.

In other words, the long product **P** may be an raw product or semi-finished product.

According to preferred but non-exclusive embodiment, as it will be described in detail hereinafter, it is clear that such plant **1** may machine the long products **P** in a substantially automatic manner and it may remotely control such machining of the long products **P.**

Preferably, the plant **1** may be configured to carry out one or more different machining operations. For example, the following machining operations may be carried out: cutting the long product **P** to the desired size, drilling creating holes, slots, openings, creating grooves and notches, marking, and any other possible machining in particular by cutting the steel surface of the steel.

As better described hereinafter, such operations may be obtained by means of laser beam.

Essentially, the plant **1** may comprise a working area **10** and means for automatically loading **20** and unloading **30** the long product **P** into/from the working area **10.**

The plant **1** may also comprise substantially box-shaped screening means **11.**

In particular, such working area **10** may thus be defined by lateral and upper screened walls **11,** so as to define, in cooperation with the ground, a closed and screened environment.

Such screened walls **11** may constitute an embodiment of the screening means. They may have a face **11'** facing the working area **10** and an opposite one **11".** It is clear that all observation points of the laser beam must incorporate connections, filters, attenuators or other devices suitable to maintain the radiation within safety levels during all conditions of use and maintenance of the laser.

The screened walls **11** may comprise a plurality of lateral walls **110** and an upper wall **111.**

The lateral walls **110** may comprise a pair of facing opposite walls **110', 110"** each one including an opening **A', A".**

The latter may respectively define the inlet **E** and the outlet **U** of the long product **P** respectively to be machined and/or machined into/from the working area **10.**

It is clear that the size of such openings **A', A"** may be such to facilitate the through-passing of the long product **P.** Considering quadrangular openings for example, the area thereof may be substantially greater than the area of the cross-section of the long product **P.**

According to preferred but non-exclusive embodiment, the openings **A', A"** may be enclosable when machining the long product **P** so as to maintain the screening effect of the walls **11** and maintain the safety levels in all conditions of use of the laser.

Suitably, the plant **1** may comprise automatic loading means **20** and automatic unloading means **30.**

The loading **20** and unloading **30** means may comprise a respective line **L1, L2** for the advancement of the long product **P,** along respective loading and unloading directions passing through the inlet **E** and the outlet **U** of the screening means **11.**

At the same time, the plant **1** may comprise advancement means **19** for promoting the advancement of the product **P** along the advancement lines **L1, L2.**

Preferably but not exclusively, the advancement means **19** may comprise the loading means **20** and the unloading means **30.**

In particular, the loading means **20** may further comprise a roller unit **40,** for example a roller unit with idle rollers, defining an axis **X** and a pusher element **18** slidable along an axis **X'** parallel or coincident to the axis **X.**

Suitably, such pusher element **18** may for example be a motor-driven gripper for promoting the advancement of the long product **P** on the roller unit **40** along the loading direction.

Preferably, the unloading means **30** may comprise a second roller unit **50** defining an axis **Y** and drive means **51** acting on the roller unit **50** to define a motor-driven roller unit so that it promotes the advancement of the long product **P** along the unloading direction.

Preferably, the roller unit **40** may have an end zone **40'** arranged at the entrance **E** and the roller unit **50** may have an end zone **50'** arranged at the outlet **U** of the screening means **11.**

Suitably, the end zones **40', 50'** of the roller units **40, 50** may be spaced apart. Preferably, the end zones **40', 50'** may be arranged on opposite sides with respect to the working area **10.**

According to a preferred but non-exclusive embodiment, the axes **X** and **Y** may be substantially coincident. In other words, the roller units **40, 50** may be substantially aligned.

Possibly, provided for inside the working area **10** may be an area without supports for the long product **P** so as to facilitate the machining thereof. For example, such zone may have a length of about 1 m.

It is clear that the long products **P** may generally be much longer than 1 m, hence when an end thereof is in such zone within the working area **10,** the long product **P** may still remain supported by the roller unit **50** or by the roller unit **40.**

Suitably, the plant **1** may comprise locking means **17** for locking the long product **P** in the working area **10** in at least one predetermined operative position during laser machining. In particular, when the long product **P** is in the operative position, a zone **P'** of the product **P** may be machined, i.e. intercepted by the laser beam.

It is clear that the plant **1** may be configured in a manner such to machine one or more zones **P'** of the long product **P** depending on the needs, as better outlined hereinafter.

Such means **17** may comprise the pusher element **18** and/or a locking gripper **171** arranged, for example, at the end **40'** of the roller unit **40.**

The laser machining may actually be carried out only after suitably locking the long product **P.**

It is clear that also the locking means **17** may be automatic or they may be controlled by the operator **O** in a per se known manner.

Preferably, the plant **1** may comprise means **60** for supporting the long product **P** during the advancement along the advancement lines **L1, L2.** In particular, the means **60** may support the long product **P** in the predetermined operative position during the machining thereof carried out by the laser.

For example, the support means **60** may comprise the roller unit **40** and/or the roller unit **50.**

In particular, when the long product **P** is in the predetermined operative position, the same may be supported by the end zones **40', 50'** of the roller units **40, 50,** while the zone **P'** may rest in the working area **10.**

It is clear that possibly provided for may be further support elements of the per se known type not represented in the attached figures.

Furthermore, advantageously, also should a cutting operation be carried out to form two portions of product, a portion may be supported by the roller unit **50** so as to remain resting on the roller unit **50** once the machining has been carried out, while the other portion may be supported by the roller unit **40.** For example, the cutting machining operation may be carried out at a distance substantially equal to or greater than 2 m from the edge of the long product **P.**

Suitably, the laser source **12** may advantageously be arranged at the ground in the first working area **10.** Preferably, the laser source **12** may be connected to a laser emitter **13** by means of an optical fibre cable **14** transporting the energy beam.

Suitably, provided for may be control means for controlling the laser emitter **13.**

The control means may include an on/off switch **12'''** operatively connected with the laser source **12** and/or laser emitter **13** and possibly an electro-optical modulator **12"** operatively connected with the laser source **12** and/or laser emitter **13** for modulating the laser beam.

The optical fibre cable **14** may have a thickness suitable to transport high energy beams and with specific wavelength so as to limit energy dispersion due to the heating of the cable.

Suitably, the laser emitter **13** may be arranged on a machining head **15.**

Preferably but not exclusively, possibly provided for may be cooling means **16** for cooling the area around the machining point and thus reduce the cooling time and the thermally altered zone.

In this case, the machining head **15** may comprise the laser emitter **13** and the cooling means **16.**

Suitably, the head **15** may be actuated by drive means **15".** Advantageously, the drive means **15"** may include an anthropomorphic robotic arm **150** coupled to the machining head **15,** which can be controlled by the operator **O** by means of control means **15'''.**

In this manner, the machining head **15** may be displaced between an inoperative position and at least one operative position for machining the long product **P** when the latter is in the predetermined operative position, in particular it may machine at least one zone **P'** thereof.

Advantageously, various types of machining operations may be carried out on the long products **P** using an anthropomorphic robot, hence without the need for rotating the product during the machining operation.

Furthermore, the working area **10** may be substantially free, i.e. clear of obstacles, so as to allow the machining head **15** to move freely around the long product **P** and in particular around the zone **P'** thereof.

It is clear that the robotic head **15** may be suitable, in cooperation with the laser emitter **13,** for the aforementioned multiple cutting machining operations that can be carried out on the long product **P** made of steel.

Suitably, irrespective of the thickness of the long product **P** and/or the type of desired work, the different machining operations may be carried out by changing the operating parameters of the laser emitter **13** and/or displacing the robotic head **15** in the space.

This will allow to precisely direct the laser beam without using mirrors and with an entirely limited overall dimension. For example, the distance between the walls **110', 110"** may be of about 1 m.

Suitably, the control means **15'''** may comprise a data input unit **15'''** programmable or programmed by the operator **O.**

As a matter of fact, the data input unit **15'''** may be in form of a programmable logic controller or it may be operatively connectible with a programmed computer medium.

Suitably, the working area **10** may thus comprise the laser source **12,** the electro-optical modulator **12",** the machining head **15** including laser emitter **13** and the relative drive means **15",** cooling means **16,** if present, and the optical fibre cable **14.**

Advantageously, there may be provided for a second control area **70** in a position spaced apart with respect to the working area **10.**

Preferably, it may also be a closed area defined by walls **72** and by the ground. Even more preferably, the working area **70** may face a continuous lateral wall **112,** i.e. substantially without openings, of the box-shaped screening means **11.**

Suitably, the control area **70** may comprise the control means **12'''** and **15'''.**

Generally, it is clear that the operator **O** may control the plant **1** from the control area **70.**

In this manner, the operator **O** positioned in the area **70** may monitor the advancement of the long product **P** along the lines **L1, L2,** and the machining of the long product **P** under safe conditions.

Advantageously, surveillance means **73** for assisting the monitoring of the machining may also be provided for.

The latter may comprise a video camera **73'** positioned in the working area **10** at the inner face **11'** of the walls **11.**

The surveillance means **73** may also comprise a monitor **73"** visible by the operator in the control area **70.**

Operatively, the long product **P** may be automatically loaded in the working area **10** and locked in the same working area **10.** In particular, the long product **P** may be positioned on the roller unit **40,** then it may be advanced thereon along the loading direction by means of a pusher element **18** until the long product **P** is in the operative position in the working area **10.**

The locking means **17** may thus lock the long product **P** in such position for machining the same.

Using the control means **12''',** the operator **O** may thus activate and/or deactivate the laser source **12** and/or the laser emitter **13.** Using the control means **15''',** the operator **O** may actuate the drive means **15"** to displace the machining head **15** to the operative and inoperative positions to machine the long product **P.**

Thus, the operator **O** may monitor the machining of the long product **P** by means of the monitor **73".**

It is clear that the operator **O** may intervene during the machining of the long product **P,** which may be, as previously described, mainly controlled by a data input unit **15'''** programmable or programmed by the operator **O.**

Subsequently, there will follow the automatic unloading from the working area **10** of the machined long product **P** by means of the unloading means **30.** In other words, drive means **51** may be activated so that the motor-driven roller unit **50** promotes the advancement of the product along the unloading direction.

Thanks to the characteristics described above, the long product **P** may be automatically loaded and unloaded by means of respective roller units **40, 50,** and it may be locked in an intermediate operative position between the inlet and the outlet in which a zone **P'** of the product **P** is at the head **15.**

In other words, the long product **P** may be substantially stationary, while the anthropomorphic robot may allow to displace the head **15** to carry out the predetermined machining.

Thus, there might not be any need for displacing the long product **P,** for example rotating on the axis thereof, to allow the machining thereof.

Furthermore, still thanks to such characteristic, the plant **1** may allow to carry out one or more machining operations on the long products **P** shaped differently. For example, machining may be carried out on a T-shaped beam and subsequently on a H-shaped beam by simply acting on the parameters of the laser emitter **13** and/or on the displacement of the head **15.**

Furthermore, still changing such parameters may allow to carry out several successive machining operations on the same zone **P'** while the long product **P** is in the operative position. For example, a notching machining operation and a subsequent drilling machining operation may be carried out.

On the other hand, the same machining or different machining operations in different zones **P'** of the long product **P** may be carried out. For example, the long product **P** may be loaded using the means **20** and locked by the means **17** in an operative position so that the drilling is carried out at a zone **P'** of the long product **P.**

Subsequently, the advancement means **19** may promote the advancement of the long product **P** and the means **17** may lock the latter in another operative position so as to carry out the drilling at a different zone **P'** of the product **P.**

In light of the above, it is clear that the invention attains the pre-set objectives.

The invention is susceptible to numerous modifications and variants. All details can be replaced by other technically equivalent elements, and the materials can be different depending on the technical needs, without departing from the scope of protection defined by the attached claims.

## Claims

1. A plant for machining long products (**P**) made of steel that can be controlled by at least one operator (**O**), comprising:
- a first working area (**10**);
- means (**20**) for the automatic loading of at least one long product (**P**) to be machined in said first working area (**10**);
- means (**17**) for locking the at least one long product (**P**) in said first working area (**10**) in at least one predetermined operative position;
- means (**30**) for the automatic unloading of at least one machined long product (**P**) from said first working area (**10**);
- at least one machining head (**15**) arranged in said first working area (**10**), said at least one machining head (**15**) comprising at least one laser emitter (**13**) for emitting a laser beam;
- a laser source (**12**) and at least one optical fibre cable (**14**) for operatively connecting said laser source (**12**) and said at least one laser emitter (**13**);
- second control means (**12'''**) that can be controlled by the operator (**O**) operatively connected to said laser source (**12**) and/or to said laser emitter (**13**) for activating and deactivating the latter;
- first drive means (**15"**) acting on said machining head (**15**);
- first control means (**15'''**) that can be actuated by the at least one operator (**O**), said control means (**15'''**) acting on said drive means (**15**") to displace said machining head (**15**) between at least one inoperative position and at least one operative position to machine at least one zone (**P'**) of the at least one long product (**P**) when the latter is in said at least one predetermined operative position;
- a second working area (**70**) spaced from said first working area (**10**) comprising said first and second control means (**15''', 12'''**);
wherein the plant further comprises substantially box-shaped screening means (**11**) arranged at said first working area (**10**) for screening the laser beam and protecting the at least one operator (**O**) arranged in said second working area (**70**) so as to operate under safe conditions, said substantially box-shaped screening means (**11**) comprising at least one inlet (**E**) for the at least one long product (**P**) to be machined and at least one outlet (**U**) for the at least one machined long product (**P**), said automatic loading and unloading means (**20, 30**) respectively comprising at least one first and at least one second line (**L1, L2**) for the advancement of the at least one long product (**P**), along respective loading and unloading directions passing through said at least one inlet (**E**) and at least one outlet (**U**) of said substantially box-shaped screening means (**11**).

2. Plant according to any one of the preceding claims, comprising means (**19**) for promoting the advancement of the at least one long product (**P**), along said at least one first and at least one second advancement line (**L1, L2**).

3. Plant according to the preceding claim, wherein said means for promoting the advancement (**19**) comprise said loading means (**20**) and/or said unloading means (**30**).

4. Plant according to any one of the preceding claims, wherein said automatic loading means (**20**) comprise at least one first roller unit (**40**) defining a first axis (**X**) and at least one pusher element (**18**) slidable along a second axis (**X'**) substantially parallel or coincident with said first axis (**X**) to promote the advancement of the at least one long product (**P**), along said loading direction.

5. Plant according to any one of the preceding claims, wherein said automatic unloading means (**30**) comprise at least one second roller unit (**50**) defining a second axis (**Y**) and second drive means (**51**) acting on said at least one second roller unit (**50**) to define a motor-driven roller unit so that the latter promotes the advancement of the at least one long product (**P**), along said unloading direction.

6. Plant according to the preceding claim when dependent on claim 4, wherein said first roller (**40**) has a first end zone (**40**') arranged at said inlet (**E**) and said second roller unit (**50**) has a second end zone (**50**') arranged at said outlet (**U**) of said screening means (**11**), said first and second end zone (**40', 50**') being mutually spaced apart.

7. Plant according to one or more of claims 4, 5 and 6, comprising means (**60**) for supporting the at least one long product (**P**) in said predetermined operative position, said support means (**60**) comprising said first roller unit (**40**) and/or said second roller unit (**50**).

8. Plant according to one or more of claims 4 to 7, wherein said locking means (**17**) comprise said pusher element (**18**) and/or a locking gripper (**171**).

9. Plant according to any one of the preceding claims, wherein said substantially box-shaped screening means (**11**) comprise a plurality of lateral walls (**110**) and an upper wall (**111**), said lateral walls (**110**) comprising at least one pair of facing opposite walls **(110', 110**") each including a respective first and second opening (**A**', **A"**), said first opening defining said at least one inlet (**E**) and said second opening defining said at least one outlet (**U**) for the at least one long product (**P**).

10. Plant according to the preceding claim, wherein said plurality of lateral walls (**110**) comprises at least one substantially continuous wall (**112**), said second working area (**70**) facing said at least one substantially continuous wall (**112**).

11. Plant according to one or more of the preceding claims, comprising an anthropomorphic robotic arm (**150**), said machining head (**15**) being operatively coupled with the latter.

12. Plant according to one or more of the preceding claims, wherein said machining head (**15**) and said at least one laser emitter (**13**) collaborate to obtain a plurality of machining operations, such as for example cutting, drilling, marking, on the at least one long product (**P**).

13. Plant according to one or more of claims 2 to 12, wherein said locking means (**17**) and said advancement means (**19**) mutually cooperate to lock the at least one long product (**P**) in a plurality of predetermined operative positions so that said machining head (**15**) machines a plurality of zones (**P**') of the at least one long product (**P**).

14. Plant according to one or more of the preceding claims, further comprising surveillance means (**30**) for the remote monitoring of the machining of said at least one long product (**P**), said surveillance means comprising at least one video camera (**73**') arranged at said first working area (**10**) and at least one monitor (**73**") arranged at said second working area (**70**), said at least one video camera (**73**') and said at least one monitor (**73**") being operatively connected to each other.

15. Method for machining long products (**P**) made of steel, preferably structural steel, by means of a plant that can be controlled by at least one operator (**O**) according to one or more of the preceding claims, the method comprising the steps of:
- automatically loading at least one long product (**P**) in said first working area (**10**);
- locking the at least one long product (**P**) in said first working area (**10**) in at least one predetermined operative position;
- machining the at least one long product (**P**) by means of said at least one machining head (**15**);
- automatically unloading said at least one long product (**P**) from said first working area (**10**);
